(19) Europäisches Patentamt
European Patent Office
Office européen des brevets

(11) **EP 1 534 959 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **03790627.8**

(22) Anmeldetag: **23.06.2003**

(51) Int Cl.:
*F04D 29/30* *(2006.01)*    *F04D 29/66* *(2006.01)*
*H02K 9/06* *(2006.01)*

(86) Internationale Anmeldenummer:
**PCT/DE2003/002084**

(87) Internationale Veröffentlichungsnummer:
**WO 2004/020838 (11.03.2004 Gazette 2004/11)**

(54) **RADIALLÜFTERRAD ZUR FÖRDERUNG VON KÜHLLUFT FÜR EINE ELEKTRISCHE MASCHINE**

RADIAL FAN WHEEL FOR TRANSPORTING COOLING AIR FOR AN ELECTRIC MACHINE

ROUE DE SOUFFLANTE RADIALE D'ACHEMINEMENT D'AIR FROID POUR UN MOTEUR ÉLECTRIQUE

(84) Benannte Vertragsstaaten:
**DE FR IT**

(30) Priorität: **23.08.2002 DE 10238753**

(43) Veröffentlichungstag der Anmeldung:
**01.06.2005 Patentblatt 2005/22**

(73) Patentinhaber: **SEG Automotive Germany GmbH
70499 Stuttgart (DE)**

(72) Erfinder: **BRAUN, Horst
70469 Stuttgart (DE)**

(74) Vertreter: **Steinbauer, Florian et al
Dehns Germany
Theresienstraße 6-8
80333 München (DE)**

(56) Entgegenhaltungen:
**DE-B- 1 253 402       FR-A- 2 280 810
FR-A- 2 811 158       JP-A- 60 132 098
NL-C- 110 389         US-A- 5 026 251**

## Beschreibung

Die vorliegende Erfindung betrifft ein Radiallüfterrad zur Förderung von Kühlluft für eine elektrische Maschine, mit einer Mehrzahl von entlang des Umfangs des Lüfterrads angebrachten Lüfterschaufeln mit Schaufelenden, welche jeweils an ihrer radial innen gelegenen Kante mit einer Tangente an den inneren Umfang des Lüfterrads einen ersten Winkel einschließen, und an ihrer radial außen gelegenen Kante mit einer Tangente an den äußeren Umfang des Lüfterrads einen zweiten Winkel einschließen, wobei der zweite Winkel um mehr als 75% größer als der erste Winkel gewählt ist, um im Betrieb des Lüfterrads Wirbelgeräusche im Bereich der Lüfterschaufeln zu minimieren.

## Stand der Technik

Bei den zumeist als Radiallüfter ausgebildeten Lüftern aus Blech zur Kühlluftförderung für elektrische Maschinen ist die Minderung der im Betrieb auftretenden Geräusche ein ständiges Anliegen. Bei der Förderung der Kühlluft spielt unter anderem das Wirbelgeräusch im Bereich der Lüfterschaufeln eine große Rolle für die gesamte Geräuschentwicklung des Lüfters.

In einem Generator ist die Kühlluftströmung im Bereich des Lüfters stark gestört. Die wichtigsten Bauteile, die für Verwirbelungen sorgen, sind die Streben und Rippen der Lagerschilde, die Oberfläche der Lagerschilde auf der dem Lüfter zugewandten Seite, Kühlkörper und Verschaltungsplatte auf der B-Seite und der Wickelkopf.

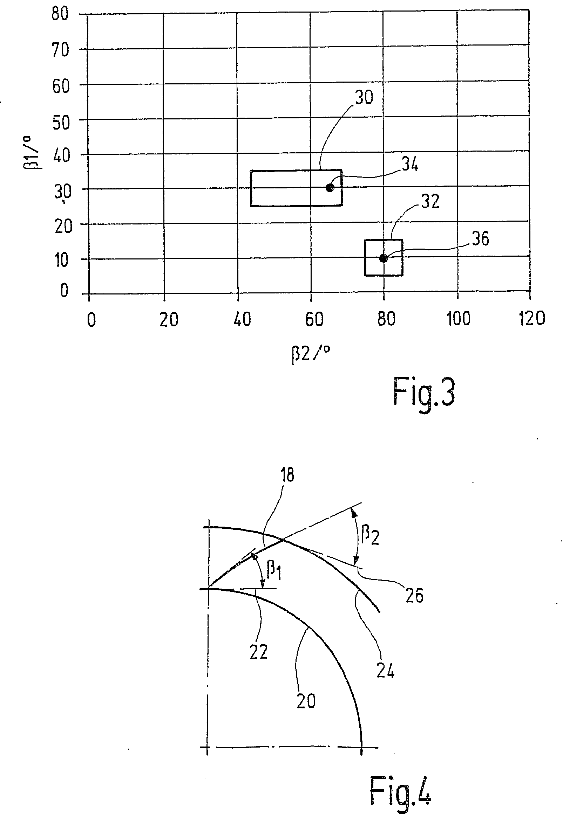

Wichtige Geometrieparameter für die Lüfterschaufeln sind der Eintrittswinkel $\beta1$ und der Austrittswinkel $\beta2$ der Schaufelenden. Figur 4 erläutert die Definition von Eintrittswinkel $\beta1$ und Austrittswinkel $\beta2$ für kreisbogenförmige Lüfterschaufelenden 18. Der Eintrittswinkel $\beta1$ ist als der Winkel zwischen der radial innen gelegenen Kante des Schaufelendes 18 und einer Tangente 22 an den inneren Umfang 20 des Lüfterrads definiert. Der Austrittswinkel $\beta2$ ist als der Winkel zwischen der radial außen gelegenen Kante des Schaufelendes 18 und einer Tangente 26 an den äußeren Umfang 24 des Lüfterrads definiert. Ein kreisbogenförmiges Schaufelende 18 einer Lüfterschaufel 16 ist durch Angabe dieser beiden Winkel $\beta1$ und $\beta2$ eindeutig bestimmt.

Aus dem Stand der Technik ist beispielsweise die Druckschrift FR 2 280 810 bekannt, welche ein Radiallüfterrad beschreibt. Weiterhin zeigt der Stand der Technik die Druckschriften NL 110389, JP 60-132098 A und US 5,026,251.

## Vorteile der Erfindung

Die erfindungsgemäße Vorrichtung gemäß Anspruch 1 baut auf dem Stand der Technik dadurch auf, dass die Schaufelenden kreisbogenförmig sind, und dass die entlang des Umfangs angeordneten Lüfterschaufeln in mehrere Schaufelsektoren aufgeteilt sind, wobei die Winkelabstände zwischen benachbarten Lüfterschaufeln innerhalb jeden Schaufelsektors gleich sind, und die Winkelabstände in verschiedenen Schaufelsektoren voneinander verschieden sind. Grundsätzlich zeichnet sich das Radiallüfterrad gemäß der Erfindung dadurch aus, dass der zweite Winkel $\beta2$ um mehr als 75% größer als der erste Winkel $\beta1$ gewählt ist, um im Betrieb des Lüfterrads Wirbelgeräusche im Bereich der Lüfterschaufeln zu minimieren. Die Erfindung beruht somit auf dem Gedanken, das Wirbelgeräusch durch eine Verbesserung des strömungsmechanischen Wirkungsgrads des Lüfters zu reduzieren. Dazu werden die Winkel $\beta1$ und $\beta2$ so gewählt, dass das spezifische Geräusch des Lüfters minimal ist. Dabei bezeichnet das spezifische Geräusch das Lüftergeräusch bezogen auf den Kühlluftdurchsatz.

Mit den Maßnahmen des Anspruchs 1 lassen sich besonders niedrige Werte für das spezifische Lüftergeräusch erzielen.

Insbesondere haben sich die Werte für den Eintrittswinkel und Austrittswinkel gemäß der Ansprüche 2 beziehungsweise 3 als vorteilhaft herausgestellt.

Die Maßnahme des Anspruchs 1 bietet zudem den Vorteil, dass die tonalen Geräusche, die vom menschlichen Gehör als unangenehm empfunden werden, weiter deutlich verringert werden.

Mit der Maßnahme des Anspruchs 4 kann auf einfache und effiziente Weise erreicht werden, dass das Amplitudenspektrum des Lüfterrads bei der Ordnung, die der Schaufelzahl entspricht, ein Minimum aufweist. Dadurch wird ein günstiges Verhalten im Hinblick auf die Geräuschentwicklung erreicht.

Es hat sich weiter herausgestellt, dass der Ungleichmäßigkeitsgrad einen wichtigen Einflussparameter für das Geräuschverhalten des Lüfterrads darstellt, wobei die Werte im Bereich des Anspruchs 5 zu besonders günstigem tonalen Verhalten beitragen.

Die Ausgestaltung des Lüfterrads nach Anspruch 6 decken oft verwendete Lüfterradgestaltungen ab, bei denen die erfindungsgemäße Lösung besonders vorteilhaft ist.

Da bei einem aus einem Stanz-Biegeteil ausgebildeten Lüfter die Anzahl der Schaufeln und der Betrag des Ungleichmäßigkeitsgrads aus Fertigungsgründen begrenzt sind, spielt bei den in Anspruch 7 angegebenen Lüfterrädern die erfindungsgemäße Gestaltung eine besonders große Rolle.

**Zeichnungen**

Die Erfindung wird nachfolgend anhand der zugehörigen Zeichnungen noch näher erläutert.
Dabei zeigt:

Figur 1      eine schematische Darstellung eines Radiallüfterrads nach einem Ausführungsbeispiel der Erfindung in perspektivischer Ansicht;

Figur 2      eine Aufsicht auf das in der Figur 1 dargestellte Lüfterrad;

Figur 3      ein Winkeldiagramm zur Darstellung der Winkelbereiche für den Eintrittswinkel $\beta 1$ und den Austrittswinkel $\beta 2$ nach der Erfindung;

Figur 4      ein Diagramm zur Erläuterung der Definition von Eintrittswinkel $\beta 1$ und Austrittswinkel $\beta 2$ bei einem kreisbogenförmigen Schaufelende;

Figur 5      in (a) und (b) schematische Darstellungen zweier nach der Erfindung besonders bevorzugter Gestaltungen eines Lüfterrads; und

Figur 6      ein Diagramm, das das spezifische Lüftergeräusch bezogen auf einen Referenzlüfter für eine Reihe verschiedener Eintrittswinkel $\beta 1$ zeigt, dargestellt als Funktion des Austrittswinkels $\beta 2$.

**Beschreibung der Ausführungsbeispiele**

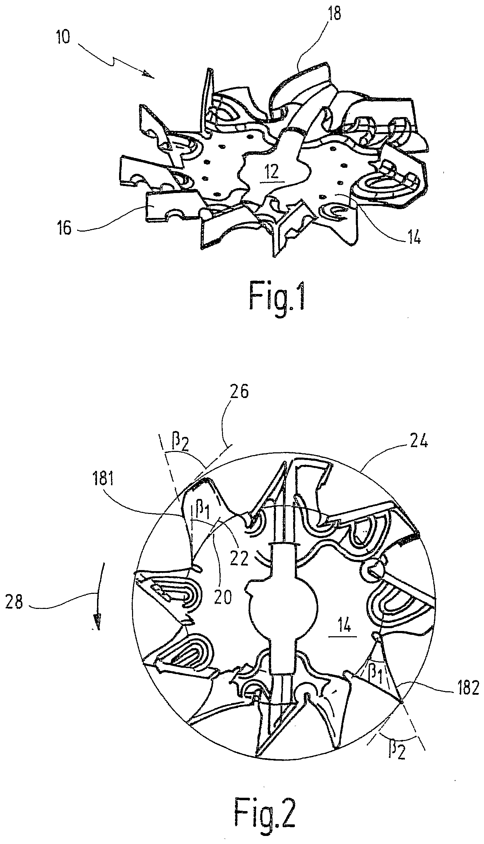

Die Darstellung der Figur 1 zeigt ein allgemein mit 10 bezeichnetes Radiallüfterrad in perspektivische Darstellung, und Figur 2 zeigt eine Aufsicht auf das Lüfterrad 10 der Figur 1.
Das Lüfterrad 10 ist aus einem Stanz-Biegeteil aus Blech gefertigt. Es kann beispielsweise in an sich bekannter Weise durch einen nicht gezeigten Elektromotor angetrieben werden und weist dazu eine zentrale Öffnung 12 zur Befestigung an einer nicht gezeigten Maschinenwelle auf. An einem Scheibenteil 14, das die zentrale Öffnung 12 enthält, sind radial entlang des Umfangs nach außen gerichtete Lüfterschaufeln 16 mit in Achsrichtung weisenden Schaufelenden 18 angeordnet. Senkrecht zur Achsrichtung erstrecken sich die Schaufelenden 18 im Wesentlichen kreisbogenförmig zwischen dem inneren Umfang 20 und dem äußeren Umfang 24 des Lüfterrads.
Im Ausführungsbeispiel der Figuren 1 und 2 ist ein Radiallüfter mit N = 10 Lüfterschaufeln dargestellt. Wie weiter unten genauer ausgeführt, sind die Lüfterschaufeln 16 mit ungleichen Abständen entlang des Umfangs des Lüfterrads angeordnet, um das Lüftergeräusch im Betrieb weiter zu reduzieren. Zwei verschiedene Lüfterschaufeln sind in der Figur 2 in ihrer Struktur vereinfacht dargestellt, um den Eintrittswinkel $\beta 1$ und den Austrittswinkel $\beta 2$ der Schaufelenden 181 und 182 deutlicher sichtbar zu machen. Die Drehrichtung des Lüfterrads im Betrieb ist durch den Pfeil 28 dargestellt.
Als besonders geräuschgünstig haben sich folgende Winkelbereiche für den Eintrittswinkel $\beta 1$ und den Austrittswinkel $\beta 2$ erwiesen:

$$(A) \quad \beta 1 = 25° \ldots 35° \quad und \quad \beta 2 = 45° \ldots 70°$$

sowie

$$(B) \quad \beta 1 = 5° \ldots 15° \quad und \quad \beta 2 = 75° \ldots 85°$$

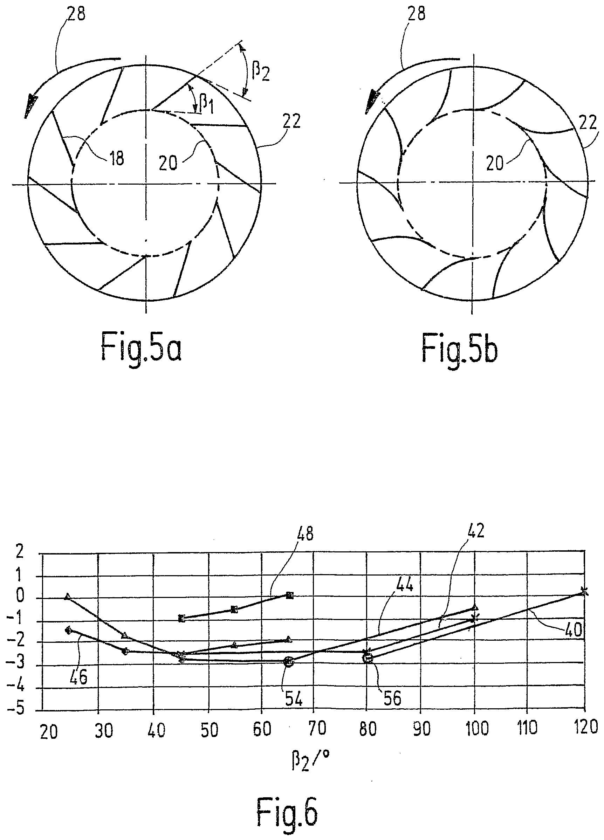

Die beiden Bereiche sind in dem Winkeldiagramm der Figur 3 mit dem Bezugszeichen 30 (Bereich A) beziehungsweise dem Bezugszeichen 32 (Bereich B) dargestellt.
Ganz besonders gute Ergebnisse wurden in Versuchen mit einem Lüfterrad erhalten, das einen Eintrittswinkel $\beta 1 = 30°$ und einen Austrittswinkel $\beta 2 = 65°$ aufwies. Diese Winkelkombination ist in der Figur 3 mit Bezugszeichen 34 gekennzeichnet. Figur 5(a) zeigt eine schematische Darstellung eines entsprechend gestalteten Lüfterrads bei dem nur die Schaufelenden 18 dargestellt sind.
Mit einem anderen Lüfterrad, das einen Eintrittswinkel $\beta 1 = 10°$ und einen Austrittswinkel $\beta 2 = 80°$ aufwies, konnten ebenfalls besonders gute Ergebnisse erhalten werden. Die Winkelkombination dieses Lüfterrads ist in der Figur

3 mit Bezugzeichen 36 gekennzeichnet und in Figur 5(b) schematisch dargestellt.

Figur 6 zeigt ein Diagramm, das Messergebnisse für das spezifische Lüftergeräusch darstellt, jeweils bezogen auf die Geräuschentwicklung eines Referenzlüfters (Ordinate gleich 0). Das Diagramm zeigt in Abhängigkeit vom Austrittswinkel β2 Messkurven für einen Eintrittswinkel von β1 = 10° (Bezugzeichen 40), β1 = 20° (Bezugzeichen 42), β1 = 30° (Bezugzeichen 44), β1 = 50° (Bezugzeichen 46) und von β1 = 70° (Bezugzeichen 48). Es ist deutlich erkennbar, dass die oben genannten Bereiche für den Eintritts- und Austrittswinkel jeweils eine starke Geräuschminderung bezogen auf den Referenzlüfter bieten.

Die Messpunkte für die als besonders geräuschgünstig erkannten Ausführungsbeispiele der Figur 5(a) mit β1 = 30° und β2 = 65°, beziehungsweise der Figur 5(b) mit β1 = 10° und β2 = 80° sind im Diagramm der Figur 6 mit Bezugzeichen 54 und 56 gekennzeichnet.

Über die geometrische Ausbildung der Schaufelenden hinaus sind bei dem in den Figuren 1 und 2 gezeigten Ausführungsbeispiel die Lüfterschaufeln 16 zur weiteren Geräuschreduzierung in drei Sektoren aufgeteilt, in denen die Schaufelabstände der Teilungen zwischen benachbarten Schaufeln 16 jeweils gleich sind. Die Winkelabstände in verschiedenen Sektoren sind jedoch voneinander verschieden. Ein erster Sektor umfasst dabei vier Lüfterschaufeln 16, die mit einem Winkelabstand von tmax = 43,2° angeordnet sind, ein zweiter Sektor umfasst ebenfalls vier Lüfterschaufeln 16, die mit Winkelabstand von tmin = 28,8° angeordnet sind, und ein dritter Sektor umfasst zwei Lüfterschaufeln 16, die mit einem mittleren Winkelabstand von tavg = 36° angeordnet sind.

Durch die ungleichmäßigen Abstände der Lüfterschaufeln wird die vom Lüfter erzeugte Schallleistung auf unterschiedliche Frequenzen, im Amplitudenspektrum also auf verschiedene Ordnungen verteilt. Je ungleichmäßiger die Lüfterschaufeln am Umfang verteilt sind, desto breiter ist das Frequenzband des Lüftergeräusches, in das die Schallleistung des Lüfterrads umverteilt wird.

Zwar wird im Allgemeinen das Lüftergeräusch bei größerem Ungleichmäßigkeitsgrad als angenehmer empfunden, doch führt ein von Null verschiedener Ungleichmäßigkeitsgrad nicht automatisch zu einem günstigeren Lüftergeräusch. Dabei ist der Ungleichmäßigkeitsgrad u durch

$$u = (tmax - tmin) / tavg$$

definiert.

Der Ungleichmäßigkeitsgrad des Lüfterrads von Figur 2 beträgt mit den oben genannten Winkelabständen u = 0,4. Ein derartiger Wert für den Ungleichmäßigkeitsgrad trägt zu einem besonders günstigen tonalen Verhalten des Lüfterrads bei. Insbesondere ergibt sich bei diesem Lüfterrad im Amplitudenspektrum bei der Ordnung der Schaufelzahl, hier der 10. Ordnung ein ausgeprägtes Minimum, was nach gegenwärtigem Verständnis ein besonders vorteilhaftes Geräuschverhalten des Lüfterrads ergibt.

Während die Erfindung insbesondere mit Bezug auf einige bevorzugte Ausführungsbeispiele gezeigt und beschrieben worden ist, versteht sich für den Fachmann, dass Änderungen in Gestalt und Einzelheiten gemacht werden können, ohne von dem Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.


**Patentansprüche**

1. Radiallüfterrad zur Förderung von Kühlluft für eine elektrische Maschine, mit einer Mehrzahl von entlang des Umfangs des Lüfterrads (10) angebrachten Lüfterschaufeln (16) mit Schaufelenden (18), welche jeweils an ihrer radial innen gelegenen Kante mit einer Tangente (22) an den inneren Umfang (20) des Lüfterrads (10) einen ersten Winkel (β1) einschließen, und an ihrer radial außen gelegenen Kante mit einer Tangente (26) an den äußeren Umfang (24) des Lüfterrads (10) einen zweiten Winkel (β2) einschließen, wobei der zweite Winkel (β2) um mehr als 75% größer als der erste Winkel (β1) gewählt ist, um im Betrieb des Lüfterrads (10) Wirbelgeräusche im Bereich der Lüfterschaufeln (16) zu minimieren, wobei der erste Winkel (β1) zwischen 25° und 35° und der zweite Winkel (β2) zwischen 45° und 70° gewählt ist oder der erste Winkel (β1) zwischen 5° und 15° und der zweite Winkel (β2) zwischen 75° und 85° gewählt ist, **dadurch gekennzeichnet, dass** die Schaufelenden (18) kreisbogenförmig sind, und dass

   - die entlang des Umfangs angeordneten Lüfterschaufeln (16) in mehrere Schaufelsektoren aufgeteilt sind, wobei
   - die Winkelabstände zwischen benachbarten Lüfterschaufeln (16) innerhalb jeden Schaufelsektors gleich sind, und

- die Winkelabstände in verschiedenen Schaufelsektoren voneinander verschieden sind.

2. Radiallüfterrad nach Anspruch 1, **dadurch gekennzeichnet, dass** der erste Winkel (β1) etwa 30°beträgt und der zweite Winkel (β2) etwa 65°beträgt.

3. Radiallüfterrad nach Anspruch 1, **dadurch gekennzeichnet, dass** der erste Winkel (β1) etwa 10°beträgt und der zweite Winkel (β2) etwa 80°beträgt.

4. Radiallüfterrad nach einem der vorhergehenden Ansprüche, **dadurch gekennzeichnet, dass**

   - die Lüfterschaufeln (16) in genau drei Schaufelsektoren aufgeteilt sind,
   - die Winkelabstände zwischen benachbarten Lüfterschaufeln (16) in einem ersten Schaufelsektor den maximalen Abstand (tmax) aufweisen,
   - die Winkelabstände zwischen benachbarten Lüfterschaufeln (16) in einem zweiten Schaufelsektor den minimalen Abstand (tmin) aufweisen,
   - die Winkelabstände zwischen benachbarten Lüfterschaufeln (16) in einem dritten Schaufelsektor einen mittleren Abstand (tavg) aufweisen, der der halben Summe von maximalem Abstand (tmax) und minimalem Abstand (tmin) entspricht, und dass
   - die Anzahl der Lüfterschaufeln (16) in dem ersten Schaufelsektor und in dem zweiten Schaufelsektor gleich ist.

5. Radiallüfterrad nach Anspruch 4, **dadurch gekennzeichnet, dass** die Werte für den maximalen Abstand (tmax) und den minimalen Abstand (tmin) so gewählt sind, dass der Ungleichmäßigkeitsgrad

$$u = 2*(tmax - tmin)/(tmax + tmin)$$

zwischen 0,35 und 0,55, bevorzugt bei etwa 0,4 liegt.

6. Radiallüfterrad nach einem der vorhergehenden Ansprüche, **dadurch gekennzeichnet, dass** das Lüfterrad (10) neun bis zwölf Lüfterschaufeln aufweist, bevorzugt, dass die Anzahl der Lüfterschaufeln (16) gleich zehn ist.

7. Radiallüfterrad nach einem der vorhergehenden Ansprüche, **dadurch gekennzeichnet, dass** das Lüfterrad (10) als Stanz-Biegeteil aus Blech ausgebildet ist.

8. Elektrische Maschine, mit einem gemäß einem der Ansprüche 1 bis 7 ausgestalteten Radiallüfterrad zur Förderung von Kühlluft für die elektrische Maschine.

**Claims**

1. A radial fan wheel for transporting cooling air for an electric machine, with a plurality of fan blades (16) with blade ends (18) mounted along the circumference of the fan (10), whereas each blade end includes a first angle (β1) at its radially inner edge with a tangent (22) to the inner periphery (20) of the fan wheel (10), and includes a second angle (β2) at its radially outer edge with a tangent (26) to the outer periphery (24) of the fan (10), wherein the second angle (β2) is selected to be greater than the first angle (β1) by more than 75%, in order to minimise swirling noise in the area of the fan blades (16) during operation of the fan wheel (10), wherein the first angle (β1) is selected between 25° and 35° and the second angle (β2) is selected between 45° and 70°, or the first angle (β1) is selected between 5° and 15° and the second angle (β2) is selected between 75° and 85°, **characterised in that** the blade ends (1 8) are circular arc-shaped, and that
the fan blades (16) arranged along the circumference are divided into a plurality of blade sectors, wherein
the angular distances between adjacent fan blades (16) within each blade sector are the same, and
the angular distances in different blade sectors are different from each other.

2. A radial fan wheel according to claim 1, **characterised in that** the first angle (β1) is about 30° and the second angle (β2) is about 65°.

3. A radial fan wheel according to claim 1, **characterised in that** the first angle (β1) is about 10° and the second angle (β2) is about 80°.

4. A radial fan wheel according to any of the preceding claims, **characterised in that** the fan blades (16) are divided into exactly three blade sectors,
   the angular distances between adjacent fan blades (16) in a first blade sector have the maximum distance (tmax),
   the angular distances between adjacent fan blades (16) in a second blade sector have the minimum distance (tmin),
   the angular distances between adjacent fan blades (16) in a third blade sector have an average distance (tavg), corresponding to half the sum of the maximum distance (tmax) and the minimum distance (tmin), and
   the number of fan blades (16) in the first blade sector and in the second blade sector is the same.

5. A radial fan wheel according to claim 4, **characterised in that** the values for the maximum distance (tmax) and the minimum distance (tmin) are selected so that the degree of unevenness
   u = 2*(tmax - tmin)/(tmax + tmin) is between 0.35 and 0.55, preferably about 0.4.

6. A radial fan wheel according to any of the preceding claims, **characterised in that** the fan wheel (10) has nine to twelve fan blades, preferably that the number of fan blades (16) is equal to ten.

7. A radial fan wheel according to any of the preceding claims, **characterised in that** the fan wheel (10) is formed as a stamped and bent part made of sheet metal.

8. An electric machine, with a radial fan wheel configured according to one of claims 1 to 7 to transport cooling air for the electric machine.

**Revendications**

1. Roue de ventilateur radial pour entraîner de l'air de refroidissement pour une machine électrique, comportant une pluralité de pales de ventilateur (16) fixée le long de la périphérie de la roue de ventilateur (10), ayant des extrémités de pales (18) qui, au niveau de leur bord radialement à l'intérieur, forment respectivement un premier angle (β1) avec une tangente (22) à la circonférence intérieure (20) de la roue de ventilateur (10), et, au niveau de leur bord radialement à l'extérieur, forment un second angle (β2) avec une tangente (26) à la circonférence extérieure (24) de la roue de ventilateur (10), dans laquelle le second angle (β2) est choisi de manière à être supérieur de plus de 75 % au premier angle (β1), afin de minimiser des bruits de turbulence dans la zone des pales de ventilateur (16) pendant le fonctionnement de la roue de ventilateur (10), dans laquelle le premier angle (β1) est choisi entre 25° et 35° et le second angle (β2) est choisi entre 45° et 70°, ou le premier angle (β1) est choisi entre 5° et 15° et le second angle (β2) est choisi entre 75° et 85°, **caractérisée en ce que** les extrémités de pales (18) sont en forme d'arc de cercle, et **en ce que**

   - les pales de ventilateur (16) agencées le long de la circonférence sont divisées en plusieurs secteurs de pales, dans laquelle
   - les distances angulaires entre des pales de ventilateur (16) voisines sont identiques à l'intérieur de chaque secteur de pales, et
   - les distances angulaires dans différents secteurs de pales sont différentes les unes des autres.

2. Roue de ventilateur radial selon la revendication 1, **caractérisée en ce que** le premier angle (β1) est d'environ 30° et le second angle (β2) est d'environ 65°.

3. Roue de ventilateur radial selon la revendication 1, **caractérisée en ce que** le premier angle (β1) est d'environ 10° et le second angle (β2) est d'environ 80°.

4. Roue de ventilateur radial selon l'une des revendications précédentes, **caractérisée en ce que**

   - les pales de ventilateur (16) sont divisées en exactement trois secteurs de pales,
   - les distances angulaires entre des pales de ventilateur (16) voisines dans un premier secteur de pales ont la distance maximale (tmax),
   - les distances angulaires entre des pales de ventilateur (16) voisines dans un deuxième secteur de pales ont la distance minimale (tmin),
   - les distances angulaires entre des pales de ventilateur (16) voisines dans un troisième secteur de pales ont une distance moyenne (tavg) qui correspond à la demie somme de la distance maximale (tmax) et de la distance minimale (tmin), et **en ce que**
- le nombre de pales de ventilateur (16) est identique dans le premier secteur de pales et dans le deuxième secteur de pales.

5. Roue de ventilateur radial selon la revendication 4, **caractérisée en ce que** les valeurs pour la distance maximale (tmax) et la distance minimale (tmin) sont choisies de sorte que le degré d'irrégularité

$$u = 2 * (tmax - tmin) / (tmax + tmin)$$

est compris entre 0,35 et 0,55, de préférence égal à 0,4 environ.

6. Roue de ventilateur radial selon l'une des revendications précédentes, **caractérisée en ce que** la roue de ventilateur (10) comporte neuf à douze pales de ventilateur, de préférence **en ce que** le nombre des pales de ventilateur (16) est égal à dix.

7. Roue de ventilateur radial selon l'une des revendications précédentes, **caractérisée en ce que** la roue de ventilateur (10) est formée comme une pièce en tôle découpée à la presse/pliée.

8. Machine électrique comportant une roue de ventilateur radial configurée selon l'une des revendications 1 à 7 pour entraîner de l'air de refroidissement pour la machine électrique.

Fig.1

Fig.2

Fig.3

Fig.4

Fig.5a

Fig.5b

Fig.6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- FR 2280810
- NL 110389
- JP 60132098 A
- US 5026251 A